# EUROPEAN PATENT SPECIFICATION

(11) **EP 3 479 630 B1**
(45) Date of publication and mention of the grant of the patent: **30.09.2020**
(21) Application number: 17737956.7
(22) Date of filing: 27.06.2017
(51) Int. Cl.: H04W 68/00, H04L 29/06, H04W 48/12

(54) **OPTIMIZED PAGING MECHANISM FOR IP MULTIMEDIA SUBSYSTEM (IMS)**
OPTIMIERTER PAGING-MECHANISMUS FÜR EIN IP-MULTIMEDIA-SUBSYSTEM (IMS)
MÉCANISME DE RADIORECHERCHE OPTIMISÉ DESTINÉ À UN SOUS-SYSTÈME MULTIMÉDIA IP (IMS)

(30) Priority: 30.06.2016 US 201662357043 P
(43) Date of publication of application: 08.05.2019
(73) Proprietor: Intel IP Corporation, Santa Clara, CA 95054 (US)
(72) Inventor: DASH, Deepak, Khordha 752056 (IN); NITIN, Gowda Basavarajappa, Breinigsville, PA 18031 (US); ZAUS, Robert, 80686 München (DE); STOJANOVSKI, Alexandre Saso, 75020 Paris (FR)
(74) Representative: Barton, Russell Glen
(86) International application number: PCT/US2017/039393
(87) International publication number: WO 2018/005419

(56) References cited:
- EP-A1- 3 030 022
- CN-A- 101 137 195
- CN-A- 102 123 442
- US-A1- 2015 208 327
- INTEL ET AL: "IMS paging type differentiation for PS domain", 3GPP DRAFT; S2-164763_WAS3492_IMS_PAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya; 20160829 - 20160902 27 August 2016 (2016-08-27), XP051130693, Retrieved from the Internet: URL:http://www.3gpp.org/ftp/Meetings_3GPP_ SYNC/SA2/Docs/ [retrieved on 2016-08-27]

## Description

### FIELD

The present disclosure is in the field of wireless communications, and more specifically, pertains to paging mechanisms for internet protocol (IP) multimedia subsystems (IMS).

### BACKGROUND

Wireless mobile communication technology uses various standards and protocols to transmit data between a node (e.g., a transmission station) and a wireless device (e.g., a mobile device), or a user equipment (UE). Some wireless devices communicate using orthogonal frequency-division multiple access (OFDMA) in a downlink (DL) transmission and single carrier frequency division multiple access (SC-FDMA) in an uplink (UL) transmission. Standards and protocols that use orthogonal frequency-division multiplexing (OFDM) for signal transmission include the third generation partnership project (3GPP) long term evolution (LTE), the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems, the access node can be an Evolved Universal Terrestrial Radio Access Network (E-UTRAN) Node B (also commonly denoted as evolved Node B, enhanced Node B, eNodeB, or eNB) with or without one or more Radio Network Controllers (RNCs), which can communicate with the UE. The DL transmission can be a communication from an access point / node or base station (e.g., a macro cell device, an eNodeB, an eNB, WiFi node, or other similar network device) to the UE, and the UL transmission can be a communication from the wireless network device to the node.

As the wireless technology is evolving towards high data rates with LTE and LTE Advanced, the packet-switched (PS) domain is becoming more prominent and efficient compared to the circuit-switched (CS) domain. Certain services, for example voice services, can be provided both via the CS and via the PS domain, the difference between the two lying in the way the data are transferred. CS is a circuit switched communication, based on resource reservation, where different resources are assigned exclusively to their respective users, and there is no statistical multiplexing. PS refers to packet switching, and different users can share the same resources, with statistical multiplexing. The CS domain is mainly used for providing voice service, such as 12.2K voice service, 64K video telephony operations, for example, and the PS domain for data services in packet communication. The user acceptance of PS services has drastically increased, which will also be boosted by the usage of IMS services in mobile devices. Users are looking forward to IMS services for the voice and video calls. However, in legacy networks, regarding the paging for services provided via the PS domain, there may be no differentiation between IMS services and non-IMS services for the UE.

EP 3 095 276 A1 provides a user equipment (UE) capable of conducting a public land mobile network (PLMN) search by determining a paging schedule for a serving cell of the UE, the serving cell being associated with a first PLMN and the paging schedule defining one or more paging occasions. The UE may initiate a search for a second PLMN between consecutive paging occasions, and may read information blocks on a broadcast channel of a cell of the second PLMN. The UE may discontinue reading a partially-read information block when the partially-read information block is scheduled for transmission at least partially concurrently with a paging occasion on the serving cell if the partially-read information block does not include information for identifying the second PLMN. The UE may ignore the first paging occasion when the partially-read information block includes the information for identifying the second PLMN.

CN 102123442 A discloses a method for sending and processing service paging from a packet domain, comprising the following steps that: in an A/Gb mode, a core network sends service type information carried in a paging message to an access network, and the access network encapsulates the received paging message to form a packet paging request message carried with the service type information and sends the packet paging request message to a mobile station (MS). According to the method disclosed by the invention, after receiving the paging message, the MS acquires the specific service type of the service paged by the paging message, thereby ensuring that the MS makes correct judgment and operation, improving the service quality for users, and enhancing the user satisfaction.

CN 101137195 B discloses method for sending paging service from packet domain, the method comprises: in A/Gb mode, a core network carries service type information in a paging message to send to an access network, the access network packages received paging messages as packet paging request messages which carry service type information and send to MS. After MS received the paging messages, concrete paging service type of the paging message is acquired, the correct judge and operation of MS are guaranteed, service quality is improved, thereby satisfaction degree of users is increased.

### SUMMARY

**T**he invention is defined by the subject matter of the independent claims. Advantageous embodiments are subject to the dependent claims.

### BRIEF DESCRIPTION OF THE DRAWINGS

**FIG. 1** illustrates a block diagram of an example wireless communications network environment for a network device (e.g., a UE, an evolved NodeB (eNB), Next Gen NodeB (gNB), or the like) according to various aspects or embodiments.
**FIG. 2** illustrates another block diagram of an example of a wireless communications network device according to various aspects or embodiments.
**FIG. 3** illustrates another block diagram of an example of a wireless communications network device with various interfaces according to various aspects or embodiments.
**FIG. 4** is a component process flow for a network environment with a network operator or network device that supports a paging policy indication (PPI) according to various aspects or embodiments described herein.
**FIG. 5** is a component process flow for a network environment with a network operator or network device that does not support a paging policy indication (PPI) according to various aspects or embodiments described herein.
**FIG. 6** illustrates a process flow of processing or generating paging for granular service awareness in the packet-switched (PS) domain with network devices according to various aspects or embodiments described herein.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor, a process running on a processor, a controller, an object, an executable, a program, a storage device, and/or a computer with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising".

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

### INTRODUCTION

In consideration of described deficiencies of paging in the PS domain, various aspects or embodiments operate to enable network devices to decide whether to respond to a paging operation or paging message, and possibly interrupting some other procedure (e.g., an ongoing public land mobile network (PLMN) search, execution, or other process).

Currently, all IMS services are categorized under the generic PS domain, which makes it difficult or impossible for the core network to indicate to the UE about any of the IMS services during mobile terminated (MT) procedures / operations. MT procedures, for example, can refer to any data communication, message or related communication process or procedure in which a network initiates towards a UE / user to perform a certain action (i.e., an incoming call / data, network (NW) initiated detach, load balancing, target area update (TAU), or the like.

Due to the difficulty of the core network to indicate to the UE about particular IMS services during MT procedures, the UE can face several issues while handling IMS service requests compared to normal PS services, and thus, it could treat all MT paging requests in the same way as PS paging. However, this could decrease efficiency at the UE side for many key performance indicators (KPI) and violate user preferences by potentially causing interruptions in services that are desired to be delivered without interruption such as a voice conversation.

In embodiments herein, mechanisms are proposed to enable differentiating the PS domain paging to more distinguishable categories by distinguishing or discerning the level of granularity that a network or network device is capable of utilizing, so that IMS services can be identified more accurately in a paging indication. Then the UE can apply preferential prioritization for IMS services as needed by the UE based on the scenario requirement or resources called upon for operations by the preferred network service.

For example, in addition to the domain indicator (possible values: "PS" for packet switched and "CS" for circuit switched), the network can provide further, more specific information with the TS 36.331-Paging message, such as by a "paging cause" parameter. The UE can use this information to decide whether to respond to the paging, possibly interrupting some other procedure like an ongoing public land mobile network (PLMN) search or other processes being executed.

In an aspect, one or more network devices, 3GPP network elements (NEs), or other network components described herein can operate the described mechanisms, operations or processes in LTE / Universal Mobile Telecommunication Service (UMTS) / GSM edge radio access network (GERAN) or any other radio access technology (RAT) which supports 3GPP defined interfaces. For example, paging operations or processes for mobile terminating services provided via the PS domain can be distinguished between different services or service categories. The network device can indicate or discern an indication in the paging message transmitted on the radio interface for which of the different service categories the MT services to the UE are being mapped. The indication in the paging message transmitted on the radio interface can be a PS paging classification parameter, for example.

A network device can further distinguish between IMS related services and non-IMS related services for the paging for mobile terminating services provided via the PS domain. For example, for IMS services, the network device can distinguish between IMS voice calls, IMS video calls and other IMS services. For other IMS services, the network device can distinguish between IMS short message services and IMS services different from IMS short message services and IMS voice or video calls. A paging policy indicator can also be utilized in the network-internal signaling to distinguish between various mobile terminating services. Additional aspects, embodiments or details of the disclosure are further described below with detail in reference to figures.

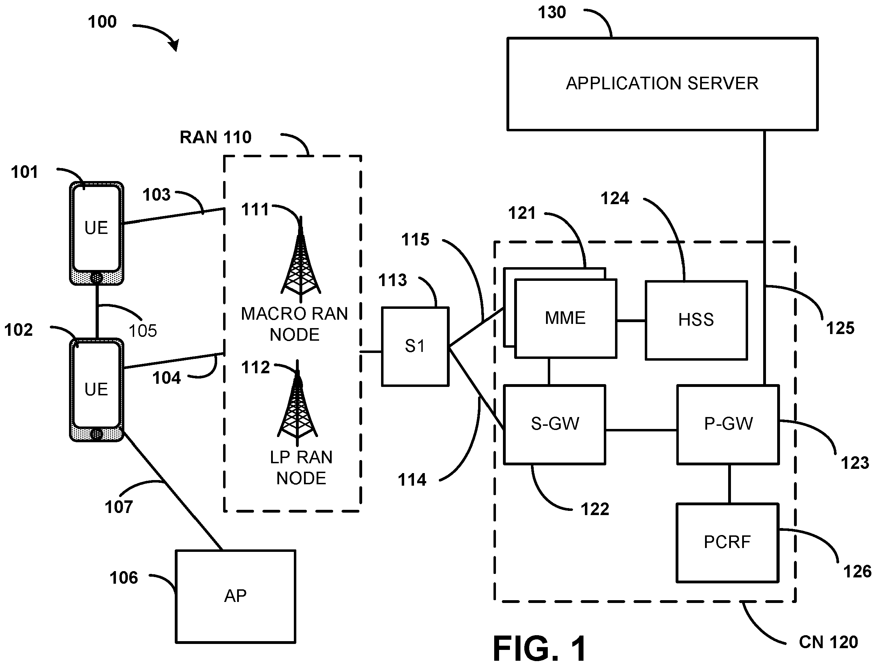

**FIG. 1** illustrates an architecture of a system 100 of a network in accordance with some embodiments. The system 100 is shown to include a user equipment (UE) 101 and a UE 102. The UEs 101 and 102 are illustrated as smartphones (e.g., handheld touchscreen mobile computing devices connectable to one or more cellular networks), but can also comprise any mobile or non-mobile computing device, such as Personal Data Assistants (PDAs), pagers, laptop computers, desktop computers, wireless handsets, or any computing device including a wireless communications interface.

In some embodiments, any of the UEs 101 and 102 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data can be a machine-initiated exchange of data. An IoT network describes interconnecting IoT UEs, which can include uniquely identifiable embedded computing devices (within the Internet infrastructure), with short-lived connections. The IoT UEs can execute background applications (e.g., keep-alive messages, status updates, etc.) to facilitate the connections of the IoT network.

The UEs 101 and 102 can be configured to connect, e.g., communicatively couple, with a radio access network (RAN) 110 - the RAN 110 can be, for example, an Evolved Universal Mobile Telecommunications System (UMTS) Terrestrial Radio Access Network (E-UTRAN), a NextGen RAN (NG RAN), or some other type of RAN. The UEs 101 and 102 utilize connections 103 and 104, respectively, each of which comprises a physical communications interface or layer (discussed in further detail below); in this example, the connections 103 and 104 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 101 and 102 can further directly exchange communication data via a ProSe interface 105. The ProSe interface 105 can alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 102 is shown to be configured to access an access point (AP) 106 via connection 107. The connection 107 can comprise a local wireless connection, such as a connection consistent with any IEEE 802.11 protocol, wherein the AP 106 would comprise a wireless fidelity (WiFi®) router. In this example, the AP 106 is shown to be connected to the Internet without connecting to the core network of the wireless system (described in further detail below).

The RAN 110 can include one or more access nodes that enable the connections 103 and 104. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). A network device as referred to herein can include any one of these APs, ANs, UEs or any other network component. The RAN 110 can include one or more RAN nodes for providing macrocells, e.g., macro RAN node 111, and one or more RAN nodes for providing femtocells or picocells (e.g., cells having smaller coverage areas, smaller user capacity, or higher bandwidth compared to macrocells), e.g., low power (LP) RAN node 112.

Any of the RAN nodes 111 and 112 can terminate the air interface protocol and can be the first point of contact for the UEs 101 and 102. In some embodiments, any of the RAN nodes 111 and 112 can fulfill various logical functions for the RAN 110 including, but not limited to, radio network controller (RNC) functions such as radio bearer management, uplink (UL) and downlink (DL) dynamic radio resource management and data packet scheduling, and mobility management.

In accordance with some embodiments, the UEs 101 and 102 can be configured to communicate using Orthogonal Frequency-Division Multiplexing (OFDM) communication signals with each other or with any of the RAN nodes 111 and 112 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 111 and 112 to the UEs 101 and 102, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this can represent the smallest quantity of resources that currently can be allocated. There are several different physical downlink channels that are conveyed using such resource blocks.

The physical downlink shared channel (PDSCH) can carry user data and higher-layer signaling to the UEs 101 and 102. The physical downlink control channel (PDCCH) can carry information about the transport format and resource allocations related to the PDSCH channel, among other things. It can also inform the UEs 101 and 102 about the transport format, resource allocation, and H-ARQ (Hybrid Automatic Repeat Request) information related to the uplink shared channel. Typically, downlink scheduling (assigning control and shared channel resource blocks to the UE 102 within a cell) can be performed at any of the RAN nodes 111 and 112 based on channel quality information fed back from any of the UEs 101 and 102. The downlink resource assignment information can be sent on the PDCCH used for (e.g., assigned to) each of the UEs 101 and 102.

The PDCCH can use control channel elements (CCEs) to convey the control information. Before being mapped to resource elements, the PDCCH complex-valued symbols can first be organized into quadruplets, which can then be permuted using a sub-block interleaver for rate matching. Each PDCCH can be transmitted using one or more of these CCEs, where each CCE can correspond to nine sets of four physical resource elements known as resource element groups (REGs). Four Quadrature Phase Shift Keying (QPSK) symbols can be mapped to each REG. The PDCCH can be transmitted using one or more CCEs, depending on the size of the downlink control information (DCI) and the channel condition. There can be four or more different PDCCH formats defined in LTE with different numbers of CCEs (e.g., aggregation level, L=1, 2, 4, or 8).

Some embodiments can use concepts for resource allocation for control channel information that are an extension of the above-described concepts. For example, some embodiments can utilize an enhanced physical downlink control channel (EPDCCH) that uses PDSCH resources for control information transmission. The EPDCCH can be transmitted using one or more enhanced the control channel elements (ECCEs). Similar to above, each ECCE can correspond to nine sets of four physical resource elements known as an enhanced resource element groups (EREGs). An ECCE can have other numbers of EREGs in some situations.

The RAN 110 is shown to be communicatively coupled to a core network (CN) 120 -via an S1 interface 113. In embodiments, the CN 120 can be an evolved packet core (EPC) network, a NextGen Packet Core (NPC) network, or some other type of CN. In this embodiment the S1 interface 113 is split into two parts: the S1-U interface 114, which carries traffic data between the RAN nodes 111 and 112 and the serving gateway (S-GW) 122, and the S1-mobility management entity (MME) interface 115, which is a signaling interface between the RAN nodes 111 and 112 and MMEs 121.

In this embodiment, the CN 120 comprises the MMEs 121, the S-GW 122, the Packet Data Network (PDN) Gateway (P-GW) 123, and a home subscriber server (HSS) 124. The MMEs 121 can be similar in function to the control plane of legacy Serving General Packet Radio Service (GPRS) Support Nodes (SGSN). The MMEs 121 can manage mobility aspects in access such as gateway selection and tracking area list management. The HSS 124 can comprise a database for network users, including subscription-related information to support the network entities' handling of communication sessions. The CN 120 can comprise one or several HSSs 124, depending on the number of mobile subscribers, on the capacity of the equipment, on the organization of the network, etc. For example, the HSS 124 can provide support for routing/roaming, authentication, authorization, naming/addressing resolution, location dependencies, etc.

The S-GW 122 can terminate the S1 interface 113 towards the RAN 110, and routes data packets between the RAN 110 and the CN 120. In addition, the S-GW 122 can be a local mobility anchor point for inter-RAN node handovers and also can provide an anchor for inter-3GPP mobility. Other responsibilities can include lawful intercept, charging, and some policy enforcement.

The P-GW 123 can terminate an SGi interface toward a PDN. The P-GW 123 can route data packets between the CN network 120 and external networks such as a network including the application server 130 (alternatively referred to as application function (AF)) via an Internet Protocol (IP) interface 125. Generally, the application server 130 can be an element offering applications that use IP bearer resources with the core network (e.g., UMTS Packet Services (PS) domain, LTE PS data services, etc.). In this embodiment, the P-GW 123 is shown to be communicatively coupled to an application server 130 via an IP communications interface 125. The application server 130 can also be configured to support one or more communication services (e.g., Voice-over-Internet Protocol (VoIP) sessions, PTT sessions, group communication sessions, social networking services, etc.) for the UEs 101 and 102 via the CN 120.

The P-GW 123 can further be a node for policy enforcement and charging data collection. Policy and Charging Enforcement Function (PCRF) 126 is the policy and charging control element of the CN 120. In a non-roaming scenario, there can be a single PCRF in the Home Public Land Mobile Network (HPLMN) associated with a UE's Internet Protocol Connectivity Access Network (IP-CAN) session. In a roaming scenario with local breakout of traffic, there can be two PCRFs associated with a UE's IP-CAN session: a Home PCRF (H-PCRF) within a HPLMN and a Visited PCRF (V-PCRF) within a Visited Public Land Mobile Network (VPLMN). The PCRF 126 can be communicatively coupled to the application server 130 via the P-GW 123. The application server 130 can signal the PCRF 126 to indicate a new service flow and select the appropriate Quality of Service (QoS) and charging parameters. The PCRF 126 can provision this rule into a Policy and Charging Enforcement Function (PCEF) (not shown) with the appropriate traffic flow template (TFT) and QoS class identifier (QCI), which commences the QoS and charging as specified by the application server 130.

In one or more embodiments, IMS services can be identified more accurately in a paging indication, which can enable the UEs 101, 102 to differentiate a level of granularity of distinguishing a mobile terminating service among MT services based on service categories between PS paging and IMS service related paging. As a result, the UEs 101, 102 can apply preferential prioritization for IMS services as desired based on any number of requests by any application, background searching (e.g., PLMN searching or the like), process, or communication. PLMN searching, for example, can be referred to as a UE internal task. If the UE finds another PLMN which according to some pre-defined rules, has a higher priority or value than the current PLMN, then it can attempt to attach to that PLMN. In particular, the UEs 101, 102 can differentiate that a network is operable or capable of distinguishing between service categories for paging among the PS domain to more distinguishable categories, so that IMS services can be identified clearly in the UEs 101, 102 in comparison to PS services.

In addition to a domain indicator (e.g., PS or CS), a network (e.g., CN 120, RAN 110, AP 106, or combination thereof as an eNB or the other network component / device) can provide further, more specific information with the 3GPP TS 36.331-Paging message, such as a "paging cause" parameter. The UE can use this information to decide whether to respond to the paging, possibly interrupting some other procedure like an ongoing PLMN search.

In one example, when UEs 101, 102 can be registered to a visited PLMN (VPLMN) and performing PLMN search (i.e., background scan for a home PLMN (HPLMN) or a higher priority PLMN), or when a registered UE is performing a search for a manual PLMN selection, the PLMN search can be interrupted in order to move to a connected mode and respond to a paging operation as part of a MT procedure / operation based on the paging cause parameter. Frequently, this paging could be for PS data (non-IMS data), which, for example, an application server 130 in the network (NW) wants to push to the UE 101 or 102 for one of the many different applications running in / on the UE 101 or 102. Even though the PS data could be delay tolerant and less important, in legacy networks the paging is often not able to be ignored completely, as critical services like an IMS call can be the reason for the PS paging. The multiple interruptions of the PLMN search caused by the paging can result in an unpredictable delay of the PLMN search or in the worst case even in a failure of the procedure, resulting in a loss of efficiency in network communication operations. A delay in moving to or performing handover to a preferred PLMN (via manual PLMN selection or HPLMN search) in a roaming condition can incur more roaming charges on a user as well.

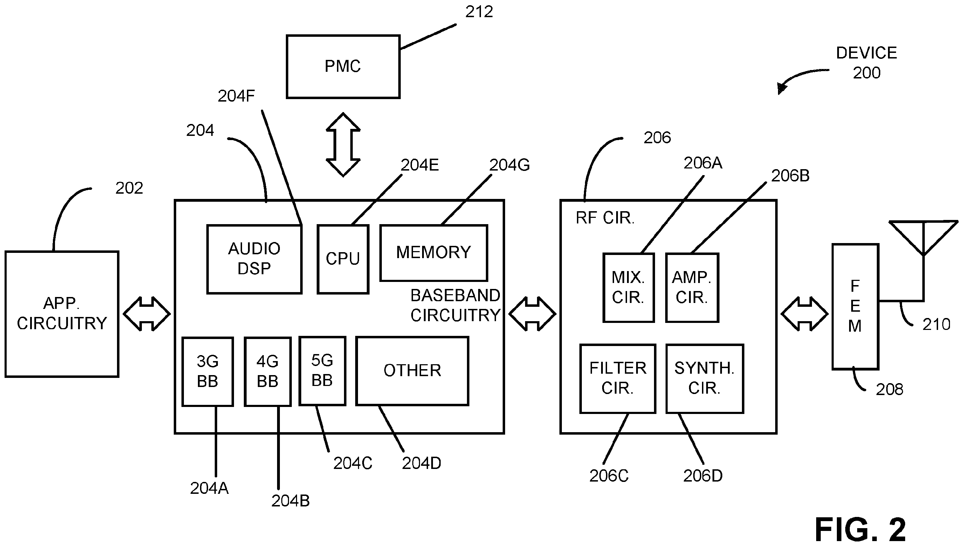

**FIG. 2** illustrates example components of a network device 200 in accordance with some embodiments. In some embodiments, the device 200 can include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 can be included in a UE 101, 102 or a RAN node 111, 112, AP, AN, eNB or other network component or device such as a Mobility Management Entity (MME), a Serving Gateway (SGW) or a Packet Gateway (PGW). In some embodiments, the device 200 can include less elements (e.g., a RAN node can not utilize application circuitry 202, and instead include a processor/controller to process IP data received from an EPC). In some embodiments, the network device 200 can include additional elements such as, for example, memory/storage, display, camera, sensor, or input/output (I/O) interface. In other embodiments, the components described below can be included in more than one device (e.g., said circuitries can be separately included in more than one device for Cloud-RAN (C-RAN) implementations).

The application circuitry 202 can include one or more application processors. For example, the application circuitry 202 can include circuitry such as, but not limited to, one or more single-core or multi-core processors. The processor(s) can include any combination of general-purpose processors and dedicated processors (e.g., graphics processors, application processors, etc.). The processors can be coupled with or can include memory/storage and can be configured to execute instructions stored in the memory/storage to enable various applications or operating systems to run on the device 200. In some embodiments, processors of application circuitry 202 can process IP data packets received from an EPC.

The baseband circuitry 204 can include circuitry such as, but not limited to, one or more single-core or multi-core processors. The baseband circuitry 204 can include one or more baseband processors or control logic to process baseband signals received from a receive signal path of the RF circuitry 206 and to generate baseband signals for a transmit signal path of the RF circuitry 206. Baseband processing circuity 204 can interface with the application circuitry 202 for generation and processing of the baseband signals and for controlling operations of the RF circuitry 206. For example, in some embodiments, the baseband circuitry 204 can include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), si2h generation (6G), etc.). The baseband circuitry 204 (e.g., one or more of baseband processors 204A-D) can handle various radio control functions that enable communication with one or more radio networks via the RF circuitry 206. In other embodiments, some or all of the functionality of baseband processors 204A-D can be included in modules stored in the memory 204G and executed via a Central Processing Unit (CPU) 204E. The radio control functions can include, but are not limited to, signal modulation/demodulation, encoding/decoding, radio frequency shifting, etc. In some embodiments, modulation/demodulation circuitry of the baseband circuitry 204 can include Fast-Fourier Transform (FFT), precoding, or constellation mapping/demapping functionality. In some embodiments, encoding/decoding circuitry of the baseband circuitry 204 can include convolution, tail-biting convolution, turbo, Viterbi, or Low Density Parity Check (LDPC) encoder/decoder functionality. Embodiments of modulation/demodulation and encoder/decoder functionality are not limited to these examples and can include other suitable functionality in other embodiments.

In some embodiments, the baseband circuitry 204 can include one or more audio digital signal processor(s) (DSP) 204F. The audio DSP(s) 204F can be include elements for compression/decompression and echo cancellation and can include other suitable processing elements in other embodiments. Components of the baseband circuitry can be suitably combined in a single chip, a single chipset, or disposed on a same circuit board in some embodiments. In some embodiments, some or all of the constituent components of the baseband circuitry 204 and the application circuitry 202 can be implemented together such as, for example, on a system on a chip (SOC).

In some embodiments, the baseband circuitry 204 can provide for communication compatible with one or more radio technologies. For example, in some embodiments, the baseband circuitry 204 can support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol can be referred to as multi-mode baseband circuitry.

RF circuitry 206 can enable communication with wireless networks using modulated electromagnetic radiation through a non-solid medium. In various embodiments, the RF circuitry 206 can include switches, filters, amplifiers, etc. to facilitate the communication with the wireless network. RF circuitry 206 can include a receive signal path which can include circuitry to down-convert RF signals received from the FEM circuitry 208 and provide baseband signals to the baseband circuitry 204. RF circuitry 206 can also include a transmit signal path which can include circuitry to up-convert baseband signals provided by the baseband circuitry 204 and provide RF output signals to the FEM circuitry 208 for transmission.

In some embodiments, the receive signal path of the RF circuitry 206 can include mixer circuitry 206a, amplifier circuitry 206b and filter circuitry 206c. In some embodiments, the transmit signal path of the RF circuitry 206 can include filter circuitry 206c and mixer circuitry 206a. RF circuitry 206 can also include synthesizer circuitry 206d for synthesizing a frequency for use by the mixer circuitry 206a of the receive signal path and the transmit signal path. In some embodiments, the mixer circuitry 206a of the receive signal path can be configured to down-convert RF signals received from the FEM circuitry 208 based on the synthesized frequency provided by synthesizer circuitry 206d. The amplifier circuitry 206b can be configured to amplify the down-converted signals and the filter circuitry 206c can be a low-pass filter (LPF) or bandpass filter (BPF) configured to remove unwanted signals from the down-converted signals to generate output baseband signals. Output baseband signals can be provided to the baseband circuitry 204 for further processing. In some embodiments, the output baseband signals can be zero-frequency baseband signals, although this is not a requirement. In some embodiments, mixer circuitry 206a of the receive signal path can comprise passive mixers, although the scope of the embodiments is not limited in this respect.

In some embodiments, the mixer circuitry 206a of the transmit signal path can be configured to up-convert input baseband signals based on the synthesized frequency provided by the synthesizer circuitry 206d to generate RF output signals for the FEM circuitry 208. The baseband signals can be provided by the baseband circuitry 204 and can be filtered by filter circuitry 206c.

In some embodiments, the mixer circuitry 206a of the receive signal path and the mixer circuitry 206a of the transmit signal path can include two or more mixers and can be arranged for quadrature downconversion and upconversion, respectively. In some embodiments, the mixer circuitry 206a of the receive signal path and the mixer circuitry 206a of the transmit signal path can include two or more mixers and can be arranged for image rejection (e.g., Hartley image rejection). In some embodiments, the mixer circuitry 206a of the receive signal path and the mixer circuitry 206a can be arranged for direct downconversion and direct upconversion, respectively. In some embodiments, the mixer circuitry 206a of the receive signal path and the mixer circuitry 206a of the transmit signal path can be configured for super-heterodyne operation.

In some embodiments, the output baseband signals and the input baseband signals can be analog baseband signals, although the scope of the embodiments is not limited in this respect. In some alternate embodiments, the output baseband signals and the input baseband signals can be digital baseband signals. In these alternate embodiments, the RF circuitry 206 can include analog-to-digital converter (ADC) and digital-to-analog converter (DAC) circuitry and the baseband circuitry 204 can include a digital baseband interface to communicate with the RF circuitry 206.

In some dual-mode embodiments, a separate radio IC circuitry can be provided for processing signals for each spectrum, although the scope of the embodiments is not limited in this respect.

In some embodiments, the synthesizer circuitry 206d can be a fractional-N synthesizer or a fractional N/N+1 synthesizer, although the scope of the embodiments is not limited in this respect as other types of frequency synthesizers can be suitable. For example, synthesizer circuitry 206d can be a delta-sigma synthesizer, a frequency multiplier, or a synthesizer comprising a phase-locked loop with a frequency divider.

The synthesizer circuitry 206d can be configured to synthesize an output frequency for use by the mixer circuitry 206a of the RF circuitry 206 based on a frequency input and a divider control input. In some embodiments, the synthesizer circuitry 206d can be a fractional N/N+1 synthesizer.

In some embodiments, frequency input can be provided by a voltage controlled oscillator (VCO), although that is not a requirement. Divider control input can be provided by either the baseband circuitry 204 or the applications processor 202 depending on the desired output frequency. In some embodiments, a divider control input (e.g., N) can be determined from a look-up table based on a channel indicated by the applications processor 202.

Synthesizer circuitry 206d of the RF circuitry 206 can include a divider, a delay-locked loop (DLL), a multiplexer and a phase accumulator. In some embodiments, the divider can be a dual modulus divider (DMD) and the phase accumulator can be a digital phase accumulator (DPA). In some embodiments, the DMD can be configured to divide the input signal by either N or N+1 (e.g., based on a carry out) to provide a fractional division ratio. In some example embodiments, the DLL can include a set of cascaded, tunable, delay elements, a phase detector, a charge pump and a D-type flip-flop. In these embodiments, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d can be configured to generate a carrier frequency as the output frequency, while in other embodiments, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency can be a LO frequency (fLO). In some embodiments, the RF circuitry 206 can include an IQ/polar converter.

FEM circuitry 208 can include a receive signal path which can include circuitry configured to operate on RF signals received from one or more antennas 210, amplify the received signals and provide the amplified versions of the received signals to the RF circuitry 206 for further processing. FEM circuitry 208 can also include a transmit signal path which can include circuitry configured to amplify signals for transmission provided by the RF circuitry 206 for transmission by one or more of the one or more antennas 210. In various embodiments, the amplification through the transmit or receive signal paths can be done solely in the RF circuitry 206, solely in the FEM 208, or in both the RF circuitry 206 and the FEM 208.

In some embodiments, the FEM circuitry 208 can include a TX/RX switch to switch between transmit mode and receive mode operation. The FEM circuitry can include a receive signal path and a transmit signal path. The receive signal path of the FEM circuitry can include an LNA to amplify received RF signals and provide the amplified received RF signals as an output (e.g., to the RF circuitry 206). The transmit signal path of the FEM circuitry 208 can include a power amplifier (PA) to amplify input RF signals (e.g., provided by RF circuitry 206), and one or more filters to generate RF signals for subsequent transmission (e.g., by one or more of the one or more antennas 210).

In some embodiments, the PMC 212 can manage power provided to the baseband circuitry 204. In particular, the PMC 212 can control power-source selection, voltage scaling, battery charging, or DC-to-DC conversion. The PMC 212 can often be included when the device 200 is capable of being powered by a battery, for example, when the device is included in a UE. The PMC 212 can increase the power conversion efficiency while providing desirable implementation size and heat dissipation characteristics.

While **FIG. 2** shows the PMC 212 coupled only with the baseband circuitry 204. However, in other embodiments, the PMC 212 can be additionally or alternatively coupled with, and perform similar power management operations for, other components such as, but not limited to, application circuitry 202, RF circuitry 206, or FEM 208.

In some embodiments, the PMC 212 can control, or otherwise be part of, various power saving mechanisms of the device 200. For example, if the device 200 is in an RRC_Connected state, where it is still connected to the RAN node as it expects to receive traffic shortly, then it can enter a state known as Discontinuous Reception Mode (DRX) after a period of inactivity. During this state, the device 200 can power down for brief intervals of time and thus save power.

If there is no data traffic activity for an extended period of time, then the device 200 can transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 does not receive data in this state, in order to receive data, it transitions back to RRC_Connected state.

An additional power saving mode can allow a device to be unavailable to the network for periods longer than a paging interval (ranging from seconds to a few hours). During this time, the device can be unreachable to the network and can power down completely. Any data sent during this time can incur a large delay with the delay presumed to be acceptable.

Processors of the application circuitry 202 and processors of the baseband circuitry 204 can be used to execute elements of one or more instances of a protocol stack. For example, processors of the baseband circuitry 204, alone or in combination, can be used execute Layer 3, Layer 2, or Layer 1 functionality, while processors of the application circuitry 204 can utilize data (e.g., packet data) received from these layers and further execute Layer 4 functionality (e.g., transmission communication protocol (TCP) and user datagram protocol (UDP) layers). As referred to herein, Layer 3 can comprise a radio resource control (RRC) layer, described in further detail below. As referred to herein, Layer 2 can comprise a medium access control (MAC) layer, a radio link control (RLC) layer, and a packet data convergence protocol (PDCP) layer, described in further detail below. As referred to herein, Layer 1 can comprise a physical (PHY) layer of a UE/RAN node. Each of these layers can be implemented to operate one or more processes or network operations of embodiments / aspects herein.

In addition, the memory 204G can comprise one or more machine-readable medium / media including instructions that, when performed by a machine or component herein cause the machine to perform acts of the method or of an apparatus or system for concurrent communication using multiple communication technologies according to embodiments and examples described herein. It is to be understood that aspects described herein can be implemented by hardware, software, firmware, or any combination thereof. When implemented in software, functions can be stored on or transmitted over as one or more instructions or code on a computer-readable medium (e.g., the memory described herein or other storage device). Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or other tangible and/or non-transitory medium, that can be used to carry or store desired information or executable instructions. Also, any connection can also be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium.

In an aspect, there is a demand to provide network services for the packet domain causing a greater volume of PS communication over networks. The earlier network services like UMTS or 3G and predecessors (2G) configured a CS domain and a PS domain providing different services. Especially CS services in the CS domain as well as voice services were considered to have a higher priority because consumers demanded an immediate response for voice calls. Based on the domain that the paging was received, the device 200 could assign certain priority for the incoming transaction. Now with LTE / 5G, services are moving toward the packet domain. Currently, the UE (e.g., 101, 102, or device 200) can get paging for a packet service without knowing any further information about MT procedure for which it is paged, such as whether someone is calling on a line, attempting to setup a VoIP call, or whether the network is just trying to deliver some packet utilized from Facebook, other application service, or other similar MT service, for example. As such, without the possibility for the UE to discriminate between the different application packets that could initiate a paging and also give a different priority to it based on one or more user preferences, a greater opportunity exists for further delays. This can be important for the UE because the UE might be doing other tasks more vital or preferred for resource allocation.

In one example, a UE (e.g., 101, 102, or device 200) could be performing a background search for other PLMNs. This is a task the UE device 200 could do in regular intervals if it is not registered on its own home PLMN or a higher priority PLMN, but roaming somewhere else. A higher priority PLMN could be a home PLMN or some other PLMN according to one or more lists configured by the subscriber or provided by the home PLMN operator (e.g., via short message service (SMS) "over the air"). Consequently, if a paging operation arrives for an MT service and an interruption results, such that a start and begin operation are executed, a sufficient frequency of these interruptions could cause the UE to never complete a background PLMN search in a reasonable amount of time or in a reasonable way. As such, it could be advantageous for the UE or network device to know that the interruption is only a packet service, with no need to react to it immediately, versus an incoming voice call that takes precedence immediately so that the background scan should be postponed.

Additionally, the device 200 can be configured to connect or include multiple subscriber identity / identification module (SIM) cards / components. Such a device 200 may be referred to as dual SIM or multi SIM device. The device 200 can operate with a single transmit and receive component that can coordinate between the different identities from which the SIM components are operating. As such, a paging for an incoming voice call could be responded to as fast as possible, while a paging for an incoming packet for an application only, for example, could be relatively ignored in order to utilize resources for the other identity (e.g., for an ongoing voice call or for communication with the SIM component) that is more important or has a higher priority from a priority list / data set / or set of user device preferences, for example. This same scenario can also be utilized for other operations or incoming data, such as with a PLMN background search or search for a manual PLMN selection, which can last for a long period of time, especially with a large number of different bands to be searched from 2G, UMTS (3G), LTE (4G) and 5G. With an ever increasing number of bands being utilized in wireless communications, if paging interruptions come in between the operations already running and the network device cannot distinguish between the various incoming packet services and real critical services such as voice, it is getting more and more difficult for the network device to complete the search for a manual PLMN selection and at the same time to ensure against a drop or loss of any incoming voice call.

Even though the incoming PS data could be delay tolerant and less important than other paging or PS services, in legacy networks the paging cannot be ignored completely, as critical services like an IMS call be the reason for the PS paging, especially if the IMS call is an emergency call or a multimedia priority service. The multiple interruptions of a PLMN search caused by the paging can further result in an unpredictable delay of the PLMN search or in the worst case even in a failure of the procedure. Additionally, a delay in moving to a preferred PLMN (via manual PLMN search or HPLMN search) in roaming conditions can incur more roaming charges on a user.

Similarly, in a multi-SIM scenario when a UE is listening to the paging channels of two networks simultaneously and has priority for voice service, an MT IMS voice call can be interpreted as MT "data" call as indicated in the paging message and can be preceded by a paging for an MT Circuit Switched (CS) call received on the other paging channel or by an MO CS call initiated by user at same time. As such, embodiments / aspects herein can decrease the call drop risk significantly for the SIM using IMS voice service.

In the present invention, 3GPP NW provides further granular information about the kind of service the network is paging for. For example, the Paging cause parameter could indicate one of the following values / classes / categories: 1) IMS voice/video service; 2) IMS SMS service; 3) IMS other services (not voice/video/SMS-related; 4) any IMS service; 5) Other PS service (not IMS-related). In particular, a network device (e.g., an eNB or access point) could only be discriminating between IMS and non-IMS services and could use 4) and 5) as service categories by which it distinguishes among, whereas a network that is able to discriminate between different types of IMS services (like voice/video call, SMS, messaging, etc.) could use service category 3) (IMS other services - not voice/video/ SMS-relate) instead of 4) (any IMS service) to explicitly indicate to the UE that the paging is for an IMS service different from voice/video and SMS. By obtaining this information, the UE could decide to suspend PLMN search only for critical services like incoming voice/video services. In some embodiments, during a tracking area update (TAU) procedure the UE could receive a PS paging category support indication that indicates a level of granularity being used / supported by the network device, network / network component. The UE could alternatively or additionally receive the PS paging category support indication indicating a supported level of granularity of PS paging categories during an (re-)attach procedure to a network as well.

In other aspects, dependent on the service category (e.g., categories, values or classes 1-5 above), the UE 101, 102, or device 200 can memorize that there was a paging to which it did not respond, which was suspended or deferred, and access the network later, when the PLMN search has been completed and the UE decides to stay on the current PLMN. For example, if the reason for the paging was a mobile terminating SMS over IMS, the MME 121 can then inform the HSS (e.g., 124) that the UE is reachable again, and the HSS 124 can initiate a signaling procedure which will result in a delivery of the SMS to the UE if resources are more available or less urgent for another operation / application / or category, for example. To this purpose, for example the UE 101, 102, or 200 could initiate a periodic tracking area update (TAU) procedure if the service category in the Paging message indicated "IMS SMS service", for example, upon which the network could deliver the SMS over IMS to the UE.

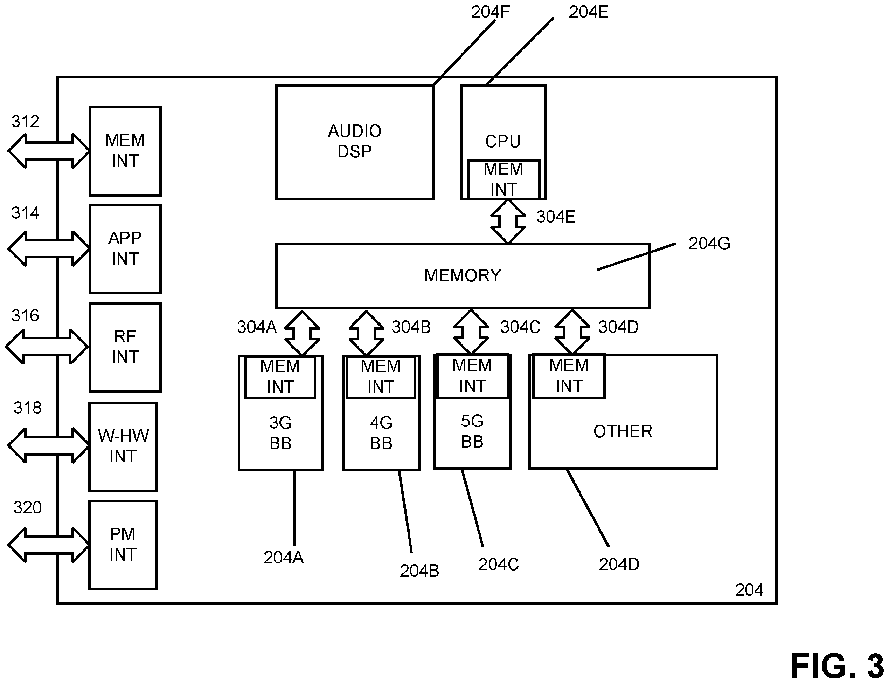

**FIG. 3** illustrates example interfaces of baseband circuitry in accordance with some embodiments. As discussed above, the baseband circuitry 204 of **FIG. 2** can comprise processors 204A-204E and a memory 204G utilized by said processors. Each of the processors 204A-204E can include a memory interface, 304A-304E, respectively, to send/receive data to/from the memory 204G.

The baseband circuitry 204 can further include one or more interfaces to communicatively couple to other circuitries/devices, such as a memory interface 312 (e.g., an interface to send/receive data to/from memory e2ernal to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth® components (e.g., Bluetooth® Low Energy), Wi-Fi® components, and other communication components), and a power management interface 320 (e.g., an interface to send/receive power or control signals to / from the PMC 212.

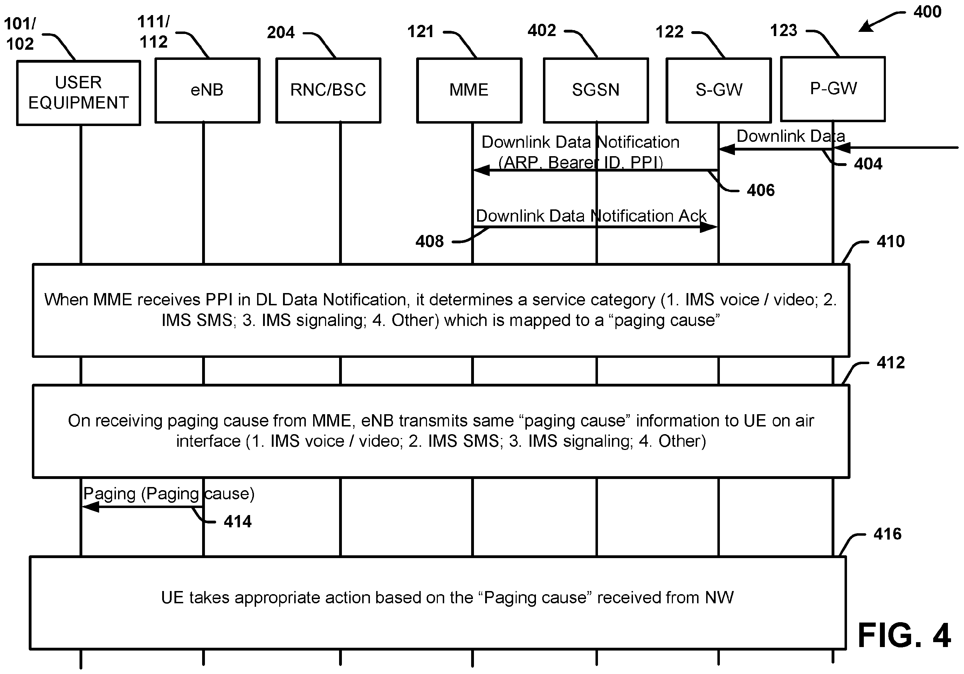

Referring to **FIG. 4**, illustrated is a process flow of a network environment 400 among various network components for a paging cause when the network or a network component as operator supports a paging policy indication (PPI). The PPI can also be referred to as a paging priority indicator / indication or paging parity indicator / indication that can be used by the MME 121, together with other parameters related to the bearer context, for example the Access Point Name (APN) and the QCI, to select a certain paging strategy configured on the MME 121.

The network environment 400 can include various network components, including the UE 101, 102, the RAN node 111, 112 as an eNB or other network device, a radio network controller / base station controller (e.g., 204), the MME 121, a SGSN 402 component, the S-GW 122, the P-GW 123. When the P-GW 123 of an LTE core network receives mobile terminated data (e.g., from an MO service or communication from another network device / application / or other network component) for a UE, 101, 102 as an MT service / communication, the P-GW 123 at 404 can forward this data to the S-GW 122. The S-GW 122 can inform the MME 121 at communication operation / link 406 about incoming data via a "downlink data notification" as a message that can include an allocation and retention priority (ARP), a bearer identification / identity that identifies a bearer from among various bearers associated with a QoS or other communication parameter / flow, as well as including a PPI when configured as per the network / operator's policy. This operator's policy can vary depending on the sophistication capability of the network device; for example, at least two conditions can be available at the network level: 1. the network / operator supports PPI; 2. the network / operator does not support PPI.

When PPI information is available, the S-GW 122 can include this PPI to the MME 121, which is the core network controller, for example. This data can also indicate a service category or a priority of services within service categories. The communication 406 can come with / accompany the ARP as available with the PPI. Mapping from the ARP, bearer identity, PPI or a combination can be done at the MME 121, and the eNBs 111, 112 thereafter receive a paging cause. The MME 121 can communicate an acknowledge (ACK) as a downlink data notification ACK 408.

Upon receiving the data 404, the S-GW 122 or P-GW 123 can perform a deep packet inspection where it looks to the IP header and actually looks past it into the IP packet or payload. As such, it can see this as a session initiation protocol (SIP) message, communication protocol for signaling for communication sessions. For example, the messages can be discerned based on message type such as whether it is a SIP INVITE request indicating that there is a remote party that wants to make a call. The S-GW 122 or P-GW 123 can even look further in the packet to see if it includes a session description protocol (SDP) offer with media types used for a voice call or video call. The S-GW 122 or P-GW 123 can also find, based on message type, that it is a SIP MESSAGE request including a payload of content-type "application/vnd.3gpp.sms" used to transfer short messages. Alternatively, the message type can even be further related to another SIP message and then to another IMS service, for example.

Then, in response to receiving the downlink data notification, the MME 121 can distinguish clearly for which service the signaling data of an MT service is waiting at the S-GW 122 for a delivery towards the UE 101, 102, or which incoming data is waiting for the user, for example. The MME 121 can then distinguish clearly for which service the paging has to be initiated towards UE 101, 102 (e.g., an IMS voice / IMS video / IMS short message service (SMS) / IMS signaling, or other PS service).

According to the downlink data notification the MME 121 can determine a service category from a plurality of different service categories such as service categories for IMS voice / IMS video, IMS short message service (SMS), IMS signaling, or other PS service, for example, at 410 according to the granularity of service categories indicated in the downlink data notification. The MME 121 can convert the service category to a "paging cause" and provide the "paging cause" by adding that information to a paging message via an S1 interface (e.g., as an S1-AP message) to the eNB 111, 112 at 412. This paging including a "paging cause" information can then be transmitted over the air to the end user or to UE 101, 102 on the Uu in the air interface at 414 by the eNB 111, 112. Then the UE can take the paging of the MT operation based on the priority of the MT operation, its current allocation of resources / other operations / processes at the time and generate an appropriate action. For example, the UE 101, 102 can suspend the current process / operation (e.g., PLMN search or the like), suspend the paging message or paging request, or cancel / forget the paging request based on a level of priority that is being supported among paging of MT operations and current / other processes, or user preferences at the UE, for example, considering the particular granularity the eNB or network is supporting for the plurality of different service categories.

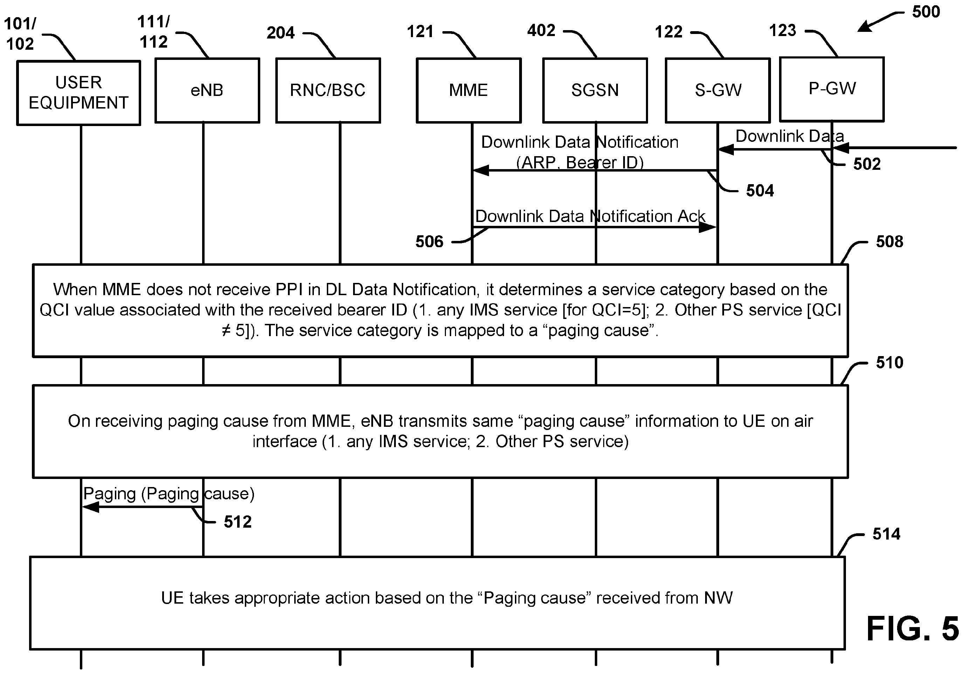

**FIG. 5** indicates another scenario that can exist according to the capabilities of the network or network devices. **FIG. 5** illustrates a process flow of a network environment 500 among various network components for a paging cause when the network or a network component as operator does not support a paging policy indication (PPI) in the core network, and thus different IMS signaling service categories. Similar to the network environment 400, the network environment 500 can include various network components, including the UE 101, 102, the RAN node 111, 112 as an eNB or other network device, a radio network controller / base station controller (e.g., 204), the MME 121, a SGSN 402 component, the S-GW 122, the P-GW 123. When the P-GW 123 of an LTE core network receives mobile terminated data (e.g., from an MO service or communication from another network device / application / or other network component) for a UE, 101, 102 as an MT operation / service / communication, the P-GW 123 at 502 can forward this data to the S-GW 122.

The S-GW 122 can inform the MME 121 at communication operation / link 504 about incoming data via a "downlink data notification" as a message that can include an allocation and retention priority (ARP) and a bearer identification (ID) that identifies a bearer from among various bearers associated with a QoS or other communication parameter / flow. As stated above, the operator's policy can vary depending on the sophistication capability of the network device; for example, at least two conditions can be available at the network level: 1. the network / operator supports PPI; 2. the network / operator does not support PPI.

When PPI information is not available or not supported in the network or network device, the MME 121 can utilize the bearer ID it receives in a "downlink data notification" message from the S-GW 122 at 504. At 506, the MME can respond with a downlink data notification ACK. Then at 508, the MME 121 can determine a service category based on the received bearer ID and an associated QCI value. If the bearer ID received in "downlink data notification" message is associated with QCI value "5" (which can equate to an IMS signaling), then the paging is marked as associated with any IMS service ("IMS any service"), such as call, video, SMS, or the like. If the bearer ID received from S-GW in "downlink data notification" message is not associated with a QCI value equal to "5", then the paging can be marked as not associated with IMS ("Other PS service").

Hence, when the network operator or core network does not support PPI, based on the bearer ID and its associated QCI value, the MME 121 can indicate a "Paging Cause" as defined by: 1. any IMS service; and 2. other PS service, to the eNB 111, 112 at 510. On receiving "paging" from the MME 121, the eNB 111, 112 can forward the "Paging Cause" in its "Paging" message on Uu (radio) interface to the UE 101, 102 at 512. On receiving the paging with the appropriate "paging cause", the UE 101, 102 can take a best suitable decision for certain scenario efficiently serving the user preferences or any priority hierarchy at 514.

The MME 121 can derive the kind of service based on the QCI of the bearer on which this incoming data has been notified. All the bearers, for example, are associated with a certain QCI value as the quality of service class indicator. So if the QCI value is five that indicates that it is an IMS signaling related data bearer. If it is not equal to five, it can be any other PS services. Here this cause can be less granular. It can be a generic IMS service or non-IMS service like any other PS service because the network does not support a PPI or other granularity indication, for example.

In embodiments, 3GPP network device or operator can provide further granular information about the kind of service it is paging for, and network components or devices can be configured for legacy and non-legacy network devices as described above in comparison of FIGs. 4 and 5. The Paging cause parameter could indicate one of the values / classes / categories from among a plurality of one or more of the following: IMS voice / IMS video service, IMS SMS service, IMS other services (not voice/video/SMS-related), any IMS service, or other PS service (not IMS-related). In particular, the first three can be used for those networks that support the PPI so they can make a distinguished differentiation between the kind of service, e.g. between or among the IMS services, such as by an enumeration type parameter as used in existing protocol messages being transferred for the information. For example, this paging cause could be defined as encoded in a bit field or, if messages are defined using a specific language, e.g. Abstract Syntax Notation One (ASN.1), it could be defined as a parameter of type "enumerated".

In other embodiments, dependent on the service category (e.g., values or classes 1-5 above), the UE 101, 102, can memorize that there was a paging to which it did not respond. For example, this can occur when the paging has a lower priority than other operations or processes occurring at the time with a higher priority (e.g., a voice call has a higher priority than an IMS SMS paging or paging for another PS service). The UE 101, 102 can then access the network later for this particular purpose, such as when for example the PLMN search, the voice call or whatever operation took a higher priority initially, has been completed.

For example, if the reason for the paging was a mobile terminating IMS SMS, the MME 121 can then inform the HSS 124 that the UE 101, 102 is currently reachable again, and the HSS 124 can initiate a signaling procedure that can result in a delivery of the SMS or other MT service to the UE 101, 102.

As such, the five different classes of services or categories, could be supported by the network differently, and not all of them may be supported by every network. This could depend, for example, on whether this PPI and deep level inspection is supported or not. If not supported, then the network can only make a distinction between IMS and non-IMS. In one embodiment, the network or a network device can detect whether the network supports PPI or not. To this purpose the UE 101, 102 could receive an indication of the support of PPI via signaling between network and UE. In other aspects, this detection of support for the PPI, or not supported, could be achieved by analyzing the paging that is being received from the network.

In one embodiment, when the UE 101, 102 is roaming in a new VPLMN, for example, it can determine whether the network or network device is supporting the paging cause parameter or not, and to which level of granularity the network is supporting the paging cause (i.e. whether the network is able to distinguish between different kinds of IMS services [voice/video vs. SMS vs. other IMS services], or whether it is just able to distinguish between IMS services and non-IMS services). The network indicates the support (and level of support) explicitly via signaling between network and UE 101, 102 (e.g., in an example not covered by the claims, in a dedicated RRC signaling or a system information broadcast (SIB) signaling; in the present invention, this is done in non-access stratum (NAS) signaling, during an attach procedure or a TAU procedure). However, it is also possible that the UE determines the support from analyzing the paging messages the network is sending on the paging channel.

In an aspect, the paging cause parameter can be added to the paging message by a network device or component. For reasons of backwards compatibility, it can be added as a new optional parameter, for example. The network could broadcast the information about support of the paging cause in the system information broadcast and could also broadcast which feature or variant of the feature or services it supports. When the support indication is to be conveyed via NAS signaling, the network can indicate the support during an attach procedure which can be used by the UE for the first registration with a network, for example. When the UE moves from one cell to another, then it may have to register again with the network if the new cell belongs to a different registration area. During this re-registration procedure the network can indicate the support of the paging cause. For example, the network may group the cells of the radio access network into tracking areas and indicate the tracking area identity of each cell in the system information broadcast of the cell. When the UE performs an attach procedure or re-registration procedure, such as a tracking area update (TAU) procedure, the network may store the tracking area identity of the cell where the procedure was performed. Later when the network needs to page the UE, e.g. because it has a data packet to deliver to the UE, it may use the stored information to page the UE only in the cells belonging to the specific tracking area.

In another aspect, a majority of pagings / paging operations / paging communications occurring via the radio interface could be for "other PS services"; on the other hand, paging for IMS services could occur sufficiently frequently so that after a few minutes of listening to a paging channel and analyzing the paging messages received on that channel, the UE can be able to decide whether the network is making any distinction between paging for IMS and paging for non-IMS services. For example, the UE 101, 102 can start operating with the hypothesis that the network is not making such a distinction. As soon as the UE receives a paging message including an IMS-related paging cause, it can change the hypothesis to "network is able to distinguish between paging for IMS and paging for non-IMS services, and behave accordingly (e.g., by not responding to a paging for "other PS services" when a PLMN search is ongoing).

In another aspect, as the majority of pagings via the radio interface could be for "other PS services", it could be efficient from a signaling point of view, if for this kind of paging the paging cause parameter is not included in the paging message at all. For example, an absence of the Paging cause parameter can implicitly indicate "Other PS service". In principle, the UE can be monitoring the paging channel and listening to what the network is using there. Here, it can learn not only from listening to the paging channel for paging messages destined for itself, but the UE 101, 102 can also listen to data related to other UEs. So it can in practice arrive at a faster determination of at what kind of network paging causes (paging parameters / classes, categories) the network is using or whether it is using any causes at all.

As such, the paging channel could be a normal broadcast channel which would be shared among all the UEs in that tracking area. The UE 101, 102 can wake up at specific time slots to listen to the paging, with a particular period configured by the network. There can be other UEs listening to the same paging channel and waking up at the same time slots so that the network can page all the UEs in that group waking up at the same time slots. So the UE 101, 102 can listen to the paging messages on that paging channel, but if the identity included in a paging message does not match the identity of the UE it could discard that paging, indicating that it is not mine but for another UE. However, the UE 101, 102 could use the information what kind of paging causes are being broadcasted for other UEs as well. Based on that information the UE can determine which level of granularity the network provides for distinguishing between different IMS services. That information can be utilized further to fine tune what kind of causes the UE 101, 102 could expect on this paging channel.

In an additional aspect / embodiment, the IMS-related paging causes for "voice/video", "IMS SMS", "other IMS services (not voice/video/SMS-related)", and "any IMS service" could then be encoded in about 2 bits. This can be useful if the network is able to explicitly indicate different paging cause values for "other IMS services (not voice/video/SMS-related)" and "any IMS service", because the network might not be able to do the classification of mobile terminating IMS services consistently for all UEs.

For example, if the network is using PPI for the classification of IMS services, it then relies on whether the proxy call state control function (P-CSCF) of a certain subscriber supports the marking of packets to be sent towards the UE 101, 102. If the P-CSCF of the subscriber does not support this marking, the UE 101, 102 then would not receive a paging message with paging cause = "IMS voice/video" destined for itself, but it could still see paging messages with this paging cause = "IMS voice/video" on the paging channel destined for other UEs (for which the respective P-CSCF supports such a marking). In other words, if the network is using the 'full granularity' (all or several of the categories / classes) of paging cause values for other UEs, the UE 101, 102 would not deduct that the network is applying the same level of granularity to itself, for example.

While the methods described within this disclosure are illustrated in and described herein as a series of acts or events, it will be appreciated that the illustrated ordering of such acts or events are not to be interpreted in a limiting sense. For example, some acts may occur in different orders and/or concurrently with other acts or pre apart from those illustrated and/or described herein. In addition, not all illustrated acts may be required to implement one or more aspects or embodiments of the description herein. Further, one or more of the acts depicted herein may be carried out in one or more separate acts and/or phases.

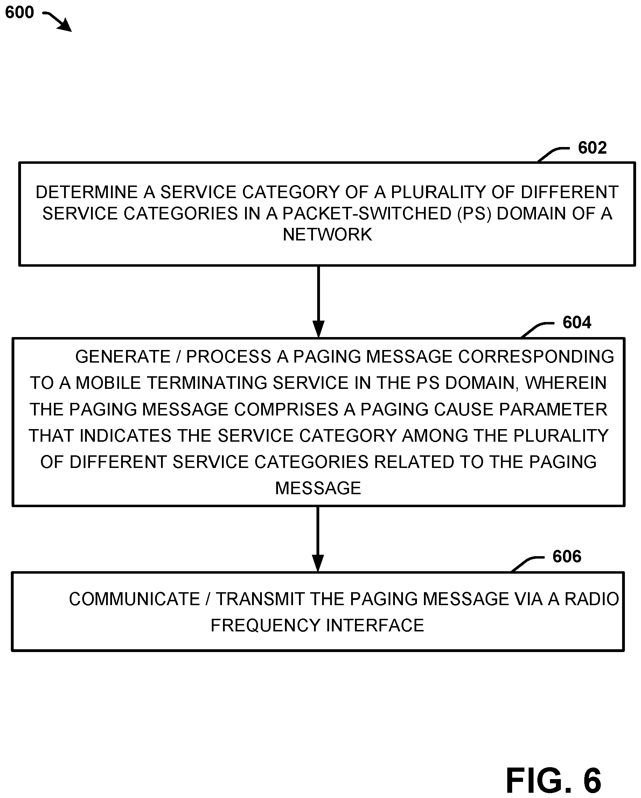

Referring to **FIG. 6**, illustrated is an example process flow 600 for a paging operation for MT services in the PS domain of a wireless communications network. A network device such as an eNB example or a corresponding network component / device (e.g., an MME, S-GW, P-GW or the like) communicatively coupled to an eNB can initiate the process flow 600 at 602 by determining a mobile terminating service category of a plurality of different mobile terminating service categories in a packet-switched (PS) domain of the mobile network.

At 604, the process flow 600 further comprises generating / processing a paging message corresponding to a mobile terminating service in the PS domain. An MT service can be any service from an application, another device, another network component, another UE, eNB, IoT, or otherwise that is requesting a response, or reception of such service or message. The paging message can comprise a paging cause parameter that indicates a service category among different service categories. The paging message, for example, can cause the UE or receiving device to respond in some manner.

At 606, the process flow 600 further comprises communicating / transmitting the paging message via a radio frequency interface.

In other embodiments, the process flow 600 can include receiving a set of data comprising at least one of: an allocation and retention priority (ARP), a bearer identification, or a PPI. A mapping from the ARP, bearer identity and PPI to a service category from among the service categories (e.g., classes or values of any of 1-5) can be performed at the MME. The MME can then generate a paging cause parameter based on the service category, and the eNB can receive the paging cause or paging cause parameter in a message / notification from the MME. A UE can receive or determine a PS paging category support indication that indicates a supported level of granularity of PS paging service categories (e.g., classes or values of any of 1-5) such as IMS/ non-IMS, or more specifically which IMS service).

In response to the set of data not comprising the PPI, the service category can be determined among the plurality of service categories based on the bearer ID and the QCI as one of a category for IMS service or a category for other PS service (not an IMS service). The plurality of service categories can comprise various granularities of an IMS service such as an IMS voice / video service, an IMS short message service (IMS SMS), or an IMS related service other than voice/video/SMS, as well as not be an IMS service, but an other PS service. In the case where the data being analyzed are either incoming or from other communications related to other UEs communicatively coupled on the network, the mobile terminating service can be determined to be an IMS related service in response to a quality of service class identifier QCI of an evolved packet system (EPS) bearer carrying a mobile terminating data packet comprising a value of five (5), and to be a non-IMS related service in response to the QCI comprising a different value than the value of five.

In addition, a deep packet inspection can be done by a network component (e.g., the S-GW or P-GW) of one or more mobile terminating data packets to distinguish between various mobile terminating services and determine the mobile terminating service to a certain level of granularity.

Alternatively or additionally, a network device or component can explicitly indicate a supported level of granularity of PS paging categories via a downlink access stratum message, a non-access stratum message, or a cell broadcast message, for example. This could avoid for the UE having to monitor the paging channel in order to determine whether the network is distinguishing between paging for IMS services and for other PS services (non-IMS services) and to decide whether to respond to a paging for other PS services, for example. In addition, a priority or list of preferences (e.g., user preferences) can be also be communicated in this fashion as well as be received by the UE to further determine actions upon receipt of pagings during various MT services being received at the same time or concurrently.

In other aspects, in response to suspending a response to the network service indicated based on the paging cause parameter of the paging message having a lower priority than a current process being executed, a re-access to the network device / component can be made when the current process has been completed. In response to the re-access, a re-initiation of a signaling procedure that delivers a paging related to the paging cause parameter for the network service can be performed. So the paging message could be remembered and suspended on account of being able to receive, communicate and interpret a paging granularity via a paging cause parameter among the UE and network components, for example.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

As it employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

In the subject specification, terms such as "store," "data store," data storage," "database," and substantially any other information storage component relevant to operation and functionality of a component and/or process, refer to "memory components," or entities embodied in a "memory," or components including the memory. It is noted that the memory components described herein can be either volatile memory or nonvolatile memory, or can include both volatile and nonvolatile memory.

By way of illustration, and not limitation, nonvolatile memory, for example, can be included in a memory, non-volatile memory (see below), disk storage (see below), and memory storage (see below). Further, nonvolatile memory can be included in read only memory, programmable read only memory, electrically programmable read only memory, electrically erasable programmable read only memory, or flash memory. Volatile memory can include random access memory, which acts as external cache memory. By way of illustration and not limitation, random access memory is available in many forms such as synchronous random access memory, dynamic random access memory, synchronous dynamic random access memory, double data rate synchronous dynamic random access memory, enhanced synchronous dynamic random access memory, Synchlink dynamic random access memory, and direct Rambus random access memory. Additionally, the disclosed memory components of systems or methods herein are intended to include, without being limited to including, these and any other suitable types of memory.

It is to be understood that aspects described herein can be implemented by hardware, software, firmware, or any combination thereof. When implemented in software, functions can be stored on or transmitted over as one or more instructions or code on a computer-readable medium. Computer-readable media includes both computer storage media and communication media including any medium that facilitates transfer of a computer program from one place to another. A storage media or a computer readable storage device can be any available media that can be accessed by a general purpose or special purpose computer. By way of example, and not limitation, such computer-readable media can comprise RAM, ROM, EEPROM, CD- ROM or other optical disk storage, magnetic disk storage or other magnetic storage devices, or other tangible and/or non-transitory medium, that can be used to carry or store desired information or executable instructions. Also, any connection is properly termed a computer-readable medium. For example, if software is transmitted from a website, server, or other remote source using a coaxial cable, fiber optic cable, twisted pair, digital subscriber line (DSL), or wireless technologies such as infrared, radio, and microwave, then coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules (e.g., procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Techniques described herein can be used for various wireless communication systems such as CDMA, TDMA, FDMA, OFDMA, SC-FDMA and other systems. The terms "system" and "network" are often used interchangeably. A CDMA system can implement a radio technology such as Universal Terrestrial Radio Access (UTRA), CDMA1800, *etc.* UTRA includes Wideband-CDMA (W-CDMA) and other variants of CDMA. Further, CDMA1800 covers IS-1800, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.18, Flash-OFDM∟, *etc.* UTRA and E-UTRA are part of Universal Mobile Telecommunication System (UMTS). 3GPP Long Term Evolution (LTE) is a release of UMTS that uses E-UTRA, which employs OFDMA on downlink and SC-FDMA on uplink. UTRA, E-UTRA, UMTS, LTE and GSM are described in documents from an organization named "3rd Generation Partnership Project" (3GPP). Additionally, CDMA1800 and UMB are described in documents from an organization named "3rd Generation Partnership Project 2" (3GPP2). Further, such wireless communication systems can additionally include peer-to-peer (*e.g*., mobile-to-mobile) *ad hoc* network systems often using unpaired unlicensed spectrums, 802.xx wireless LAN, BLUETOOTH and any other short- or long- range, wireless communication techniques.

Single carrier frequency division multiple access (SC-FDMA), which utilizes single carrier modulation and frequency domain equalization is a technique that can be utilized with the disclosed aspects. SC-FDMA has similar performance and essentially a similar overall complexity as those of OFDMA system. SC-FDMA signal has lower peak-to-average power ratio (PAPR) because of its inherent single carrier structure. SC-FDMA can be utilized in uplink communications where lower PAPR can benefit a mobile terminal in terms of transmit power efficiency.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc*.), optical disks (*e.g.,* compact disk (CD), digital versatile disk (DVD), *etc*.), smart cards, and flash memory devices (*e.g.,* EPROM, card, stick, key drive, *etc*.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom.

In particular regard to the various functions performed by the above described components (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. An apparatus (200) employed in a user equipment, UE (101, 102), the apparatus (200) comprising:
one or more processors configured to:
receive a paging message (414, 512) corresponding to a mobile terminating service in a packet-switched, PS, domain of a network, wherein the paging message (414, 512);
distinguish the mobile terminating service from among a plurality of different mobile terminating services based on a paging cause parameter of the paging message (414, 512); and
a radio frequency interface configured to receive the paging message (414, 512) over a radio interface (104, 105);
**characterized in that** the one or more processors are further configured to:
receive a PS paging category support indication indicating a supported level of granularity of PS paging categories during an attach procedure or a tracking area update, TAU, procedure;
determine a level of granularity of distinguishing the mobile terminating services from among the plurality of mobile terminating services based on the PS paging category support indication;
wherein the PS paging category support indication indicates the plurality of service categories of said mobile terminating services comprising:
- a category for each of an internet protocol, IP, multimedia subsystem, IMS, related service and a non-IMS related service, or
- a category for each of an IMS voice / video call, an IMS short message service, another IMS service, and a non-IMS service.

2. The apparatus of claim 1, wherein the one or more processors are further configured to:
suspend or ignore the paging message (414, 512) in response to the mobile terminating service having a lower priority or a same priority than another mobile terminating service, a mobile originating service, or another task; and
respond to the paging message (414, 512) in response to the mobile terminating service having a higher priority than the another mobile terminating service, the mobile originating service or the another task.

3. The apparatus (200) of claim 2, wherein the another task comprises a public land mobile network, PLMN, search, and the mobile terminating service having the lower priority or the same priority than the PLMN search comprises a non-IMS service or an IMS short message service, SMS, or
wherein the another task comprises a public land mobile network, PLMN, search, and the mobile terminating service having the higher priority than the PLMN search comprises an IMS voice call or IMS video call.

4. The apparatus (200) of any one of claims 1-3, wherein the one or more processors are further configured to:
suspend the paging message (414, 512) in response to another mobile terminating service, a mobile originating service, or another task having a higher priority or a same priority than the mobile terminating service based on the paging cause parameter of the paging message (414, 512) until another service or another task is completed;
determine that the another service or the another task is completed; and
access the network and initiate a signaling procedure that delivers a paging response related to the paging cause parameter for the mobile terminating service.

5. The apparatus (200) of claim 4, wherein the signaling procedure comprises a periodic tracking area updating, TAU, procedure, or a radio resource control, RRC, signaling procedure.

6. The apparatus (200) of any one of claims 1-5, wherein the one or more processors are further configured to:
identify a paging cause parameter associated with the paging message (414, 512); and
in response to identifying a paging cause parameter, determine whether a network is configured to distinguish between paging for an IMS service and paging for a non-IMS service, and, for the IMS service, between paging for an IMS voice / video call, an IMS short message service, and a non-IMS service.

7. An apparatus (200) configured to be employed in a mobile network (110, 120) that comprises an evolved NodeB, eNB (111, 112), a Mobility Management Entity, MME (121), or a Serving Gateway, SGW (122), or Packet Gateway, PGW (123), comprising:
one or more processors configured to:
determine a mobile terminating service category of a plurality of different mobile terminating service categories in a packet-switched, PS, domain of the mobile network (110, 120);
generate a paging message (414, 512) corresponding to a mobile terminating service in the PS domain, wherein the paging message (414, 512) comprises a paging cause parameter that indicates a service category among the plurality of different service categories; and
a communication interface configured to transmit the paging message (414, 512) over an air interface;
**characterized in that** the one or more processors are further configured to:
transmit a PS paging category support indication indicating a supported level of granularity of PS paging categories during an attach procedure or a tracking area update, TAU, procedure;
wherein the PS paging category support indication indicates the plurality of service categories of said mobile terminating services comprising:
- a category for each of an internet protocol, IP, multimedia subsystem, IMS, related service and a non-IMS related service, or
a category for each of an IMS voice / video call, an IMS short message service, another IMS service, and a non-IMS service.

8. The apparatus (200) of claim 7, wherein the one or more processors are further configured to:
receive (406, 504) a set of data comprising at least one of: an allocation and retention priority, ARP, a bearer identity, or a paging policy indication; in response to the set of data comprising the paging policy indication,
determine (410) a service category of the mobile terminating service among the plurality of different service categories according to the level of granularity of service categories supported by the mobile network (110, 120);
in response to the set of data not comprising the paging policy indication, determine (508) a service category of the mobile terminating service, based on the bearer identity and a quality of service class indicator, QCI, associated with the bearer identity, among the service categories of an internet protocol, IP, multimedia subsystem, IMS, service and another PS service; and
generate (410, 508) the paging cause parameter based on the service category.

9. The apparatus (200) of claim 7 or 8, wherein the one or more processors are further configured to:
determine (508) the mobile terminating service to be an IMS related service in response to a QCI of an evolved packet system, EPS, bearer carrying a mobile terminating data packet comprising a value of five, and to be a non-IMS related services in response to the QCI comprising a different value than the value of five.

10. The apparatus (200) of any one of claims 7-9, wherein the one or more processors are further configured to:
initiate a deep packet inspection of one or more mobile terminating data packets to distinguish between various mobile terminating services and determine the mobile terminating service.

11. A computer-readable storage medium storing executable instructions that, in response to execution, cause one or more processors of an evolved NodeB, eNB (111, 112), a Mobility Management Entity, MME (121), Serving Gateway, SGW (122), device or a Packet Gateway, PGW (123), to perform operations comprising:
determining a service category of a plurality of different service categories in a packet-switched, PS, domain of a network;
generating a paging message (414, 512) corresponding to a mobile terminating service in the PS domain, wherein the paging message (414, 512) comprises a paging cause parameter that indicates the service category among the plurality of different service categories related to the paging message (414, 512); and communicating the paging message (414, 512) via a radio frequency interface;
**characterized in that** the operations further comprise:
transmitting a PS paging category support indication indicating a supported level of granularity of PS paging categories during an attach procedure or a tracking area update, TAU, procedure;
wherein the PS paging category support indication indicates the plurality of service categories of said mobile terminating services comprising:
- a category for each of an internet protocol, IP, multimedia subsystem, IMS, related service and a non-IMS related service, or
a category for each of an IMS voice / video call, an IMS short message service, another IMS service, and a non-IMS service.

12. The computer-readable storage medium of claim 11, wherein the operations further comprise:
receiving (406, 504) a set of data comprising at least one of: an allocation and retention priority, ARP, a bearer identity, or a paging policy indication; and
generating (410, 508) a service category based on at least one of: the bearer identification and a quality of service class indicator, QCI, associated with the bearer identity, or the paging policy indication.

13. The computer-readable storage medium of claim 12, wherein the operations further comprise:
in response to the set of data comprising the paging policy indication, generating (410) a service category among the plurality of different service categories according to the level of granularity of service categories supported by the network, wherein the plurality of service categories comprise: an IMS voice / video service, an IMS short message service, IMS SMS, an IMS related service other than voice/video/SMS, and the other PS service, or
in response to the set of data not comprising the paging policy indication, generating (508) a service category, based on the bearer ID and the QCI associated with the bearer identity, among the service categories of an internet protocol, IP, multimedia subsystem, IMS, service and another PS service.

14. The computer-readable storage medium of claim 12, wherein the operations further comprise:
determining (508) the mobile terminating service to be an IMS related service in response to a QCI of an evolved packet system, EPS, bearer carrying a mobile terminating data packet comprising a value of five, and to be a non-IMS related services in response to the QCI comprising a different value than the value of five.

15. The computer-readable storage medium of any one of claims 12-14, wherein the operations further comprise:
initiating a deep packet inspection of one or more mobile terminating data packets to distinguish between various mobile terminating services and determine the mobile terminating service.

## Patentansprüche

1. Vorrichtung (200), die in einem Benutzergerät, UE (101, 102), eingesetzt wird, die Vorrichtung (200) umfassend:
einen oder mehrere Prozessoren, die konfiguriert sind zum:
Empfangen einer Paging-Nachricht (414, 512), die einem Mobile-Terminating Dienst in einer paketvermittelten, PS, Domäne eines Netzwerks entspricht, wobei die Paging-Nachricht (414, 512);
Unterscheiden des Mobile-Terminating Dienstes unter einer Vielzahl von verschiedenen Mobile-Terminating Diensten auf der Grundlage eines Paging-Ursachenparameters der Paging-Nachricht (414, 512); und
eine Funkfrequenzschnittstelle, die zum Empfangen der Paging-Nachricht (414, 512) über eine Funkschnittstelle (104, 105) konfiguriert ist;
**dadurch gekennzeichnet, dass** der eine oder die mehreren Prozessoren ferner konfiguriert sind zum:
Empfangen einer PS-Paging-Kategorie-Unterstützungsangabe, die einen unterstützten Granularitätsgrad der PS-Paging-Kategorien während eines Attach-Vorgangs oder eines Tracking Area Update, TAU, Vorgangs angibt;
Bestimmen eines Granularitätsgrades zum Unterscheiden der Mobile-Terminating Dienste unter der Vielzahl von Mobile-Terminating Diensten auf der Grundlage der PS-Paging-Kategorie-Unterstützungsangabe;
wobei die PS-Paging-Kategorie-Unterstützungsangabe die Vielzahl von Dienstkategorien der Mobile-Terminating Dienste angibt, umfassend:
- eine Kategorie für jeweils einen Internet-Protokoll, IP, Multimedia-Subsystem, IMS, bezogenen Dienst und einen nicht IMS-bezogenen Dienst, oder
- eine Kategorie für jeweils einen IMS-Sprach-/Videoanruf, einen IMS-Kurznachrichtendienst, einen anderen IMS-Dienst und einen Nicht-IMS-Dienst.

2. Vorrichtung nach Anspruch 1, wobei der eine oder die mehreren Prozessoren ferner konfiguriert sind zum:
Aussetzen oder Ignorieren der Paging-Nachricht (414, 512) als Reaktion darauf, dass der Mobile-Terminating Dienst eine niedrigere Priorität oder die gleiche Priorität wie ein anderer Mobile-Terminating Dienst, ein Mobile-Originating Dienst oder eine andere Aufgabe aufweist; und
Antworten auf die Paging-Nachricht (414, 512) als Reaktion auf den Mobile-Terminating Dienst, der eine höhere Priorität aufweist als der andere Mobile-Terminating Dienst, der Mobile-Originating Dienst oder die andere Aufgabe.

3. Vorrichtung (200) nach Anspruch 2, wobei die andere Aufgabe eine Public Land Mobile Network, PLMN, Suche, umfasst und der Mobile-Terminating Dienst, der die niedrigere Priorität oder die gleiche Priorität wie die PLMN-Suche aufweist, einen Nicht-IMS-Dienst oder einen IMS-Kurznachrichtendienst, SMS umfasst, oder
wobei die andere Aufgabe eine Public Land Mobile Network, PLMN, Suche, umfasst und der Mobile-Terminating Dienst, der die höhere Priorität als die PLMN-Suche aufweist, einen IMS-Sprachanruf oder IMS-Videoanruf umfasst.

4. Vorrichtung (200) nach einem der Ansprüche 1-3, wobei der eine oder die mehreren Prozessoren ferner konfiguriert sind zum:
Aussetzen der Paging-Nachricht (414, 512) als Reaktion auf einen anderen Mobile-Terminating Dienst, einen Mobile-Originating Dienst oder eine andere Aufgabe, die eine höhere Priorität oder die gleiche Priorität wie der Mobile-Terminating Dienst aufweist, auf der Grundlage des Paging-Ursachenparameters der Paging-Nachricht (414, 512), bis ein anderer Dienst oder eine andere Aufgabe abgeschlossen ist;
Bestimmen, dass der andere Dienst oder die andere Aufgabe abgeschlossen ist; und
Zugreifen auf das Netzwerk und Initiieren eines Signalisierungsvorgangs, die eine Paging-Antwort in Bezug auf den Paging-Ursachenparameter für den Mobile-Terminating Dienst liefert.

5. Vorrichtung (200) nach Anspruch 4, wobei der Signalisierungsvorgang einen periodischen Tracking Area Updating, TAU, Vorgang, oder ein Radio Resource Control, RRC, Signalisierungsvorgang umfasst.

6. Vorrichtung (200) nach einem der Ansprüche 1-5, wobei der eine oder die mehreren Prozessoren ferner konfiguriert sind zum:
Identifizieren eines Paging-Ursachenparameters der mit der Paging-Nachricht (414, 512) verbunden ist; und
als Reaktion auf Identifizieren eines Paging-Ursachenparameters, Bestimmen, ob ein Netzwerk so konfiguriert ist, dass es zwischen Paging für einen IMS-Dienst und Paging für einen Nicht-IMS-Dienst und, für den IMS-Dienst, zwischen Paging für einen IMS-Sprach-/Videoanruf, einen IMS-Kurznachrichtendienst und einen Nicht-IMS-Dienst unterscheidet.

7. Vorrichtung (200), die konfiguriert ist, um in einem mobilen Netzwerk (110, 120) eingesetzt zu werden, das einen Evolved NodeB, eNB (111, 112), eine Mobility Management Entity, MME (121), oder ein Serving Gateway, SGW (122), oder ein Packet Gateway, PGW (123), umfasst, umfassend:
einen oder mehrere Prozessoren, die konfiguriert sind zum:
Bestimmen einer Mobile-Terminating Dienstkategorie aus einer Vielzahl verschiedener Mobile-Terminating Dienstkategorien in einer paketvermittelten, PS, Domäne des mobilen Netzwerks (110, 120);
Erzeugen einer Paging-Nachricht (414, 512), die einem Mobile-Terminating Dienst in der PS-Domäne entspricht, wobei die Paging-Nachricht (414, 512) einen Paging-Ursachenparameter umfasst, der eine Dienstkategorie unter der Vielzahl von verschiedenen Dienstkategorien angibt; und
eine Kommunikationsschnittstelle, die zum Übertragen der Paging-Nachricht (414, 512) über eine Luftschnittstelle konfiguriert ist;
**dadurch gekennzeichnet, dass** der eine oder die mehreren Prozessoren ferner konfiguriert sind zum:
Übertragen einer PS-Paging-Kategorie-Unterstützungsangabe, die einen unterstützten Granularitätsgrad der PS-Paging-Kategorien während eines Attach-Vorgangs, oder eines Tracking Area Update, TAU, Vorgangs angibt;
wobei die PS-Paging-Kategorie-Unterstützungsangabe die Vielzahl von Dienstkategorien der Mobile-Terminating-Dienste angibt, umfassend:
- eine Kategorie für jeweils einen Internet-Protokoll, IP, Multimedia-Subsystem, IMS, bezogenen Dienst und einen nicht IMS-bezogenen Dienst, oder
eine Kategorie für jeweils einen IMS-Sprach-/Videoanruf, einen IMS-Kurznachrichtendienst, einen anderen IMS-Dienst und einen Nicht-IMS-Dienst.

8. Vorrichtung (200) nach Anspruch 7, wobei der eine oder mehrere Prozessoren ferner konfiguriert sind zum:
Empfangen eines Datensatzes (406, 504), der mindestens eines der Folgenden umfasst: eine Zuweisungs- und Aufbewahrungspriorität, ARP, eine Trägeridentität oder eine Paging-Richtlinienangabe;
als Reaktion auf den Datensatz, der die Paging-Richtlinienangabe umfasst, Bestimmen (410) einer Dienstkategorie des Mobile-Terminating-Dienstes unter der Vielzahl verschiedener Dienstkategorien gemäß dem Granularitätsgrad von Dienstkategorien, die von dem mobilen Netzwerk (110, 120) unterstützt werden;
als Reaktion auf den Datensatz, der die Paging-Richtlinienangabe nicht umfasst, Bestimmen (508) einer Dienstkategorie des Mobile-Terminating-Dienstes, auf der Grundlage der Trägeridentität und einem Quality of Service Class Indicator, QCI, der mit der Trägeridentität verbunden ist, unter den Dienstkategorien eines Internet-Protokolls, IP, Multimedia-Subsystem, IMS, Dienstes und eines anderen PS-Dienstes;
und
Erzeugen (410, 508) des Paging-Ursachenparameters auf der Grundlage der Dienstkategorie.

9. Vorrichtung (200) nach Anspruch 7 oder 8, wobei der eine oder die mehreren Prozessoren ferner konfiguriert sind zum:
Bestimmen (508), dass der Mobile-Terminating-Dienst ein IMS-bezogener Dienst ist, als Reaktion auf einen QCI eines Evolved Packet System, EPS, Trägers, der ein Mobile-Terminating-Datenpacket trägt, das einen Wert von fünf umfasst, und ein nicht IMS-bezogener Dienst ist, als Reaktion auf den QCI, der einen unterschiedlichen Wert als dem Wert von fünf umfasst.

10. Vorrichtung (200) nach einem der Ansprüche 7-9, wobei der eine oder die mehreren Prozessoren ferner konfiguriert sind zum:
Initiieren einer Deep Packet Inspection eines oder mehrerer Mobile-Terminating-Datenpakete, um zwischen verschiedenen Mobile-Terminating-Diensten zu unterscheiden und den Mobile-Terminating-Dienst zu bestimmen.

11. Computerlesbares Speichermedium, das ausführbare Anweisungen speichert, die, als Reaktion auf Ausführen, einen oder mehrere Prozessoren eines Evolved NodeB, eNB (111, 112), einer Mobility Management Entity, MME (121), eines Serving Gateway, SGW (122), eines Geräts oder eines Packet Gateway, PGW (123), veranlassen, Operationen auszuführen, die Folgendes umfassen:
Bestimmen einer Dienstkategorie aus einer Vielzahl verschiedener Dienstkategorien in einer paketvermittelten, PS, Domäne von eines Netzwerkes;
Erzeugen einer Paging-Nachricht (414, 512), die einem Mobile-Terminating Dienst in der PS-Domäne entspricht, wobei die Paging-Nachricht (414, 512) einen Paging-Ursachungsparameter umfasst, der die Dienstkategorie unter der Vielzahl von verschiedenen Dienstkategorien angibt, die sich auf die Paging-Nachricht (414, 512) beziehen; und
Kommunizieren der Paging-Nachricht (414, 512) über eine Funkfrequenzschnittstelle;
**dadurch gekennzeichnet, dass** die Operationen ferner
umfassen:
Übertragen einer PS-Paging-Kategorie-Unterstützungsangabe, die einen unterstützten Granularitätsgrad von PS-Paging-Kategorien während eines Attach-Vorgangs oder eines Tracking Area Update, TAU, Vorgangs angibt;
wobei die PS-Paging-Kategorie-Unterstützungsangabe die Vielzahl von Dienstkategorien der Mobile-Terminating-Dienste angibt, umfassend:
- eine Kategorie für jeweils einen Internet-Protokoll, IP, Multimedia-Subsystem, IMS, bezogenen Dienst und einen nicht IMS-bezogenen Dienst, oder
eine Kategorie für jeweils einen IMS-Sprach-/Videoanruf, einen IMS-Kurznachrichtendienst, einen anderen IMS-Dienst und einen Nicht-IMS-Dienst.

12. Computerlesbares Speichermedium nach Anspruch 11, wobei die Operationen ferner umfassen:
Empfangen (406, 504) eines Datensatzes, der mindestens eines der Folgenden umfasst: eine Zuweisungs- und Aufbewahrungspriorität, ARP, eine Trägeridentität oder eine Paging-Richtlinienangabe;
und
Erzeugen (410, 508) einer Dienstkategorie, die auf mindestens einer der Folgenden basiert: der Trägerkennung und einem Quality of Service Class Indicator, QCI, der mit der Trägeridentität oder der Paging-Richtlinienangabe verbunden ist.

13. Computerlesbares Speichermedium nach Anspruch 12, wobei die Operationen ferner umfassen:
als Reaktion auf den Datensatz, der die Paging-Richtlinienangabe umfasst, Erzeugen (410) einer Dienstkategorie unter der Vielzahl von verschiedenen Dienstkategorien gemäß dem Granularitätsgrad von Dienstkategorien, die von dem Netzwerk unterstützt werden, wobei die Vielzahl von Dienstkategorien umfasst: einen IMS-Sprach-/Videodienst, einen IMS-Kurznachrichtendienst, IMS-SMS, einen IMS-bezogenen Dienst außer Sprach-/Video-/SMS und den anderen PS-Dienst, oder
als Reaktion auf den Datensatz, der nicht die Paging-Richtlinienangabe umfasst, Erzeugen (508) einer Dienstkategorie, basierend auf der Träger-ID und dem QCI der mit der Trägeridentität verbunden ist, unter den Dienstkategorien eines Internet-Protokolls, IP, Multimedia-Subsystem, IMS, Dienstes und eines anderen PS-Dienstes.

14. Computerlesbares Speichermedium nach Anspruch 12, wobei die Operationen ferner umfassen:
Bestimmen (508), dass der Mobile-Terminating-Dienst, ein IMS-bezogener Dienst ist, als Reaktion auf einen QCI eines Evolved Packet System, EPS, Trägers der ein Mobile-Terminating-Datenpaket trägt, das einen Wert von fünf umfasst, und ein nicht IMS-bezogener Dienst ist, als Reaktion auf den QCI, der einen unterschiedlichen Wert als den Wert von fünf umfasst.

15. Computerlesbares Speichermedium nach einem der Ansprüche 12-14, wobei die Operationen ferner umfassen:
Initiieren einer Deep Packet Inspection eines oder mehrerer Mobile-Terminating-Datenpakete, um zwischen verschiedenen Mobile-Terminating-Diensten zu unterscheiden und den Mobile-Terminating-Dienst zu bestimmen

## Revendications

1. Un appareil (200) employé dans un équipement utilisateur, UE (101, 102), l'appareil (200) comprenant :
un ou plusieurs processeurs configurés pour :
recevoir un message de paging (414, 512) correspondant à un service de terminaison mobile dans un domaine à commutation par paquets, PS, d'un réseau, où il y a le message de paging (414, 512) ;
distinguer le service de terminaison mobile parmi une pluralité de services de terminaison mobile différents sur la base d'un paramètre de cause de paging du message de paging (414, 512) ; et
une interface radiofréquence configurée pour recevoir le message de paging (414, 512) sur une interface radio (104, 105) ;
**caractérisé en ce que** les un ou plusieurs processeurs sont en outre configurés pour :
recevoir une indication de prise en charge de catégorie de paging PS indiquant un niveau pris en charge de granularité de catégories de paging PS lors d'une procédure de rattachement ou d'une procédure de mise à jour de zone de suivi, TAU ;
déterminer un niveau de granularité de distinction des services de terminaison mobile parmi la pluralité de services de terminaison mobile sur la base de l'indication de prise en charge de catégorie de paging PS ;
dans lequel l'indication de prise en charge de catégorie de paging PS indique que la pluralité de catégories de service desdits services de terminaison mobile comprennent :
- une catégorie pour chacun parmi un service lié au sous-système multimédia en protocole internet, IP, IMS, et un service non lié à l'IMS, ou
- une catégorie pour chacun parmi un appel vocal/vidéo IMS, un service de message court IMS, un autre service IMS, et un service non-IMS.

2. L'appareil selon la revendication l, dans lequel les un ou plusieurs processeurs sont en outre configurés pour :
suspendre ou ignorer le message de paging (414, 512) en réponse au fait que le service de terminaison mobile a une priorité moindre ou une même priorité qu'un autre service de terminaison mobile, un service d'origine mobile, ou une autre tâche ; et
répondre au message de paging (414, 512) en réponse au fait que le service de terminaison mobile a une priorité plus élevée que l'autre service de terminaison mobile, le service d'origine mobile ou l'autre tâche.

3. L'appareil (200) selon la revendication 2, dans lequel l'autre tâche comprend une recherche de réseau mobile terrestre public, PLMN, et le service de terminaison mobile ayant la priorité moindre ou la même priorité que la recherche PLMN comprend un service non-IMS ou un service de message court, SMS, IMS, ou
dans lequel l'autre tâche comprend une recherche de réseau mobile terrestre public, PLMN, et le service de terminaison mobile ayant la priorité plus élevée que la recherche PLMN comprend un appel vocal IMS ou un appel vidéo IMS.

4. L'appareil (200) selon l'une des revendications 1 à 3, dans lequel les un ou plusieurs processeurs sont en outre configurés pour :
suspendre le message de paging (414, 512) en réponse au fait qu'un autre service de terminaison mobile, un service d'origine mobile, ou une autre tâche a une priorité plus élevée ou une même priorité que le service de terminaison mobile sur la base du paramètre de cause de paging du message de paging (414, 512) jusqu'à ce qu'un autre service ou une autre tâche soit achevé ;
déterminer que l'autre service ou l'autre tâche est achevé ; et
accéder au réseau et lancer une procédure de signalisation qui délivre une réponse de paging liée au paramètre de cause de paging pour le service de terminaison mobile.

5. L'appareil (200) selon la revendication 4, dans lequel la procédure de signalisation comprend une procédure périodique de mise à jour de zone de suivi, TAU, ou une procédure de signalisation de contrôle de ressource radio, RRC.

6. L'appareil (200) selon l'une des revendications 1 à 5, dans lequel les un ou plusieurs processeurs sont en outre configurés pour :
identifier un paramètre de cause de paging associé au message de paging (414, 512) ; et
en réponse à l'identification d'un paramètre de cause de paging, déterminer si un réseau est configuré pour faire la distinction entre un paging pour un service IMS et un paging pour un service non-IMS, et, pour le service IMS, faire la distinction entre un paging pour un appel vocal/vidéo IMS, un service de message court IMS, et un service non-IMS.

7. Un appareil (200) configuré pour être employé dans un réseau mobile (110, 120) qui comprend un nœud B évolué, eNB (111, 112), une entité de gestion de la mobilité, MME (121), ou une passerelle de service, SGW (122), ou une passerelle de paquets, PGW (123), comprenant :
un ou plusieurs processeurs configurés pour :
déterminer une catégorie de service de terminaison mobile d'une pluralité de catégories de service de terminaison mobile différentes dans un domaine à commutation par paquets, PS, du réseau mobile (110, 120) ;
générer un message de paging (414, 512) correspondant à un service de terminaison mobile dans le domaine PS, dans lequel le message de paging (414, 512) comprend un paramètre de cause de paging qui indique une catégorie de service parmi la pluralité de catégories de service différentes ; et
une interface de communication configurée pour transmettre le message de paging (414, 512) sur une interface radio ;
**caractérisé en ce que** les un ou plusieurs processeurs sont en outre configurés pour :
transmettre une indication de prise en charge de catégorie de paging PS indiquant un niveau pris en charge de granularité de catégories de paging PS lors d'une procédure de rattachement ou d'une procédure de mise à jour de zone de suivi, TAU ;
dans lequel l'indication de prise en charge de catégorie de paging PS indique que la pluralité de catégories de service desdits services de terminaison mobile comprennent :
- une catégorie pour chacun parmi un service lié au sous-système multimédia en protocole internet, IP, IMS, et un service non lié à l'IMS, ou
- une catégorie pour chacun parmi un appel vocal/vidéo IMS, un service de message court IMS, un autre service IMS, et un service non-IMS.

8. L'appareil (200) selon la revendication 7, dans lequel les un ou plusieurs processeurs sont en outre configurés pour :
recevoir (406, 504) un jeu de données comprenant au moins l'une parmi : une priorité d'attribution et de rétention, ARP, une identité de bearer, ou une indication de politique de paging ;
en réponse au fait que le jeu de données comprend l'indication de politique de paging, déterminer (410) une catégorie de service du service de terminaison mobile parmi la pluralité de catégories de service différentes selon le niveau de granularité de catégories de service pris en charge par le réseau mobile (110, 120) ;
en réponse au fait que le jeu de données ne comprend pas d'indication de politique de paging, déterminer (508) une catégorie de service du service de terminaison mobile, sur la base de l'identité de bearer et d'un indicateur de classe de qualité de service, QCI, associé à l'identité de bearer, parmi les catégories de service d'un service de sous-système multimédia de protocole internet IP, IMS, et d'un autre service PS ; et
générer (410, 508) le paramètre de cause de paging sur la base de la catégorie de service.

9. L'appareil (200) selon la revendication 7 ou 8, dans lequel les un ou plusieurs processeurs sont en outre configurés pour :
déterminer (508) le service de terminaison mobile comme étant un service lié à l'IMS en réponse à un QCI d'un bearer de système de paquet évolué, EPS, portant un paquet de données de terminaison mobile comprenant une valeur de cinq, et comme étant des services non liés à l'IMS en réponse au QCI comprenant une valeur différente de la valeur de cinq.

10. L'appareil (200) selon l'une des revendications 7 à 9, dans lequel les un ou plusieurs processeurs sont en outre configurés pour :
lancer une inspection approfondie des paquets d'un ou plusieurs paquets de données de terminaison mobile pour faire la distinction entre des services de terminaison mobile variés et déterminer le service de terminaison mobile.

11. Un support de stockage lisible par ordinateur stockant des instructions exécutables qui, en réponse à leur exécution, amènent un ou plusieurs processeurs d'un nœud B évolué, eNB (111, 112), d'une entité de gestion de la mobilité, MME, (121), d'un dispositif de passerelle de service, SGW, (122) ou d'une passerelle de paquets, PGW (123), à réaliser les opérations comprenant :
la détermination d'une catégorie de service d'une pluralité de catégories de service différentes dans un domaine à commutation par paquets, PS, d'un réseau ;
la génération d'un message de paging (414, 512) correspondant à un service de terminaison mobile dans le domaine PS, dans lequel le message de paging (414, 512) comprend un paramètre de cause de paging qui indique la catégorie de service parmi la pluralité de catégories de service différentes liées au message de paging (414,512) ; et
la communication du message de paging (414, 512) via une interface radiofréquence ;
**caractérisé en ce que** les opérations comprennent en outre :
la transmission d'une indication de prise en charge de catégorie de paging PS indiquant un niveau pris en charge de granularité de catégories de paging PS lors d'une procédure de rattachement ou d'une procédure de mise à jour de zone de suivi, TAU ;
dans lequel l'indication de prise en charge de catégorie de paging PS indique que la pluralité de catégories de service desdits services de terminaison mobile comprennent :
- une catégorie pour chacun parmi un service lié au sous-système multimédia en protocole internet, IP, IMS, et un service non lié à l'IMS, ou
- une catégorie pour chacun parmi un appel vocal/vidéo IMS, un service de message court IMS, un autre service IMS, et un service non-IMS.

12. Le support de stockage lisible par ordinateur selon la revendication 11, dans lequel les opérations comprennent en outre :
la réception (406, 504) d'un jeu de données comprenant au moins l'une parmi : une priorité d'attribution et de rétention, ARP, une identité de bearer, ou une indication de politique de paging ;
et la génération (410, 508) d'une catégorie de service sur la base d'au moins l'un parmi : l'identification de bearer et un indicateur de classe de qualité de service, QCI, associé à l'identité de bearer, ou l'indication de politique de paging.

13. Le support de stockage lisible par ordinateur selon la revendication 12, dans lequel les opérations comprennent en outre :
en réponse au fait que le jeu de données comprend l'indication de politique de paging, la génération (410) d'une catégorie de service parmi la pluralité de catégories de service différentes selon le niveau de granularité de catégories de service pris en charge par le réseau, dans lequel la pluralité de catégories de service comprennent :
un service vocal/vidéo IMS, un service de message court IMS, SMS IMS, un service lié à l'IMS autre que le service vocal/vidéo/SMS, et l'autre service PS, ou
en réponse au fait que le jeu de données ne comprend pas d'indication de politique de paging, la génération (508) d'une catégorie de service, sur la base de l'ID de bearer et du QCI associé à l'identité de bearer, parmi les catégories de service d'un service de sous-système multimédia en protocole internet, IP, IMS, et d'un autre service PS.

14. Le support de stockage lisible par ordinateur selon la revendication 12, dans lequel les opérations comprennent en outre :
la détermination (508) du service de terminaison mobile comme étant un service lié à l'IMS en réponse à un QCI d'un bearer de système de paquet évolué, EPS, portant un paquet de données de terminaison mobile comprenant une valeur de cinq, et comme étant des services non liés à l'IMS en réponse au QCI comprenant une valeur différente de la valeur de cinq.

15. Le support de stockage lisible par ordinateur selon l'une des revendications 12 à 14, dans lequel les opérations comprennent en outre :
le lancement d'une inspection approfondie des paquets d'un ou plusieurs paquets de données de terminaison mobile pour faire la distinction entre des services de terminaison mobile variés et déterminer le service de terminaison mobile.
